# EUROPEAN PATENT APPLICATION

(11) **EP 4 064 627 A1**
(43) Date of publication of application: **28.09.2022**
(21) Application number: 20898993.9
(22) Date of filing: 06.11.2020
(51) Int. Cl.: H04L 12/751

(54) **METHOD FOR UPDATING ROUTER LINK, ROUTER, AND STORAGE MEDIUM**

(30) Priority: 09.12.2019 CN 201911252045
(71) Applicant: ZTE Corporation, Shenzhen, Guangdong 518057 (CN)
(72) Inventor: HE, Jianjun, Shenzhen, Guangdong 518057 (CN)
(74) Representative: Betten & Resch
(86) International application number: PCT/CN2020/127223
(87) International publication number: WO 2021/114978

(57) **Abstract**

A method for updating a router link, a router and a storage medium are disclosed. The method is applied into a network including at least three routers. The method includes: after any router has detected a change in a current network state, updating network link-state information according to the changed network state, where one of the at least three routers is elected as a router pointing to a virtual designated router (DR), the any router is a router pointing to the virtual DR, or the any router is a router controlled by other routers pointing to the virtual DR.

## Description

### CROSS-REFERENCE TO RELATED APPLICATION

This application is filed on the basis of Chinese patent application No. 201911252045.7, filed on December 9, 2019 and claims the priority of the Chinese patent application, the entire content of which are incorporated herein by reference.

### TECHNICAL FIELD

The present application relates to the field of communication technology, and more particularly, to a method for updating a router link, a router, and a storage medium.

### BACKGROUND

In a communication network, many protocols use Designated Router (DR) mechanism. For example, in a multiple-access network, all routers exchange packets with an elected DR, to avoid a large number of redundant packets caused by exchange of packets between all the routers. Similarly, the DR mechanisms are also introduced in link-state routing protocol, Open Shortest Path First (OSPF) protocol, and Intermediate System-to-Intermediate System (ISIS) protocol. In addition, Backup Designated Router (BDR) mechanism is also introduced into the OSPF protocol. That is, when a DR fails, the BDR can immediately take over from the failed DR to perform DR duties.

However, when the router generates a linkage pointing to the DR in a link-state information packet, the DR also generates a linkage which points to all routers in the link-state information packet. When the DR is changed, all the routers will generate new link-state information packets, delete the linkage pointing to an old DR, and add a linkage pointing to a current new DR router. Meanwhile, the old DR will delete the previously advertised link-state packets of the linkage pointing to each router, and the new DR will generate link-state information packets of the linkage which points to a router. However, in the process of a change of link-state information, there may occur a problem such as traffic interruption caused by routing learning failure.

### SUMMARY

To solve the above-mentioned at least one technical problem to a certain extent, embodiments of the present application provide following schemes.

The embodiments of the present application provide a method for updating a router link, which is applied into a network including at least three routers. The method includes: in response to any router detecting a change in a current network state, updating network link-state information according to the changed network state, where any one of the at least three routers is elected as a router pointing to a virtual designated router (DR), the any router is a router pointing to the virtual DR, or the any router is a router controlled by other routers pointing to the virtual DR.

The embodiments of the present application provide a router, including: a memory, a processor, and a computer program stored on the memory and executable by the processor. The computer program, when executed by the processor, causes the processor to perform the method for updating a router link according to any one of the embodiments of the present application.

The embodiments of the present application provide a computer-readable storage medium storing a computer program which, when executed by a processor, causes the processor to perform the method for updating a router link according to any one of the embodiments of the present application.

With regard to the above embodiments and other aspects of the present application, as well as implementations thereof, further explanation is provided in the brief description of the drawings, the detailed description and the claims.

### BRIEF DESCRIPTION OF DRAWINGS

FIG. 1 is a schematic networking diagram of a network;
FIG. 2 is a schematic diagram showing a router link-state advertisement in the network;
FIG. 3 is a schematic diagram showing a DR change in the network;
FIG. 4 is a flowchart of a method for updating a router link according to an embodiment; and
FIG. 5 is a schematic structural diagram of a router according to an embodiment.

### DETAILED DESCRIPTION

Detailed description of embodiments of the present application will be made below in conjunction with the accompanying drawings to make the objectives, technical schemes and advantages of the present application more apparent. It is to be noted that if not in collision, the embodiments and the features therein in the present application may be arbitrarily combined with each other.

In addition, in the embodiments of the present application, words such as "exemplary" are intended to represent examples, exemplifications or illustrations. Any embodiment or design scheme described as "exemplary" in the embodiments of the present application should not be construed as more preferred or advantageous over other embodiments or design schemes. Rather, use of words such as "exemplary" is intended to present related concepts in a manner.

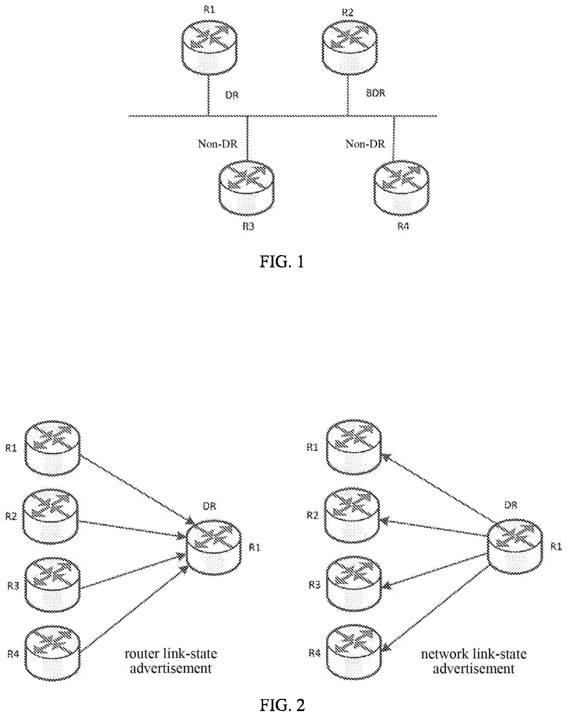

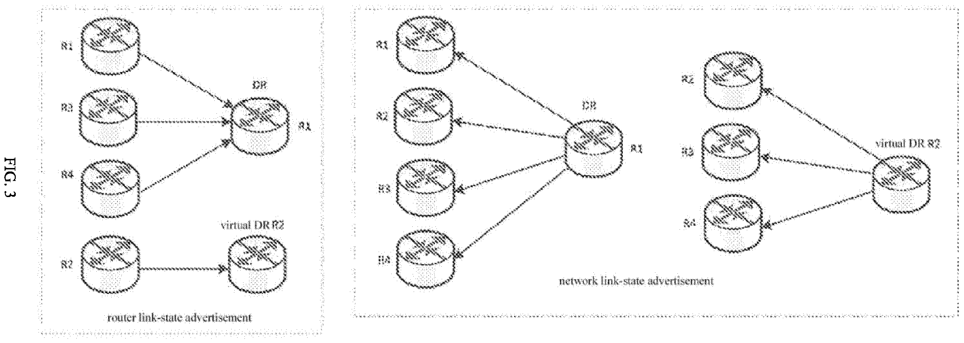

As shown in FIG. 1, in the scenario of a network comprising a plurality of routers (for example, at least three routers), assuming that a designated router (DR) and a backup designated router (BDR) of a current network are represented by R1 and R2 respectively. FIG. 2 shows a state of connection between the routers in the current network based on link-state information. If R1 fails at the moment of T0, R2 first perceives the failure of R1 at the moment of T1 and triggers a DR election. R2 is determined to be a new DR through the election by all routers in the network. In this case, R2 refreshes the link-state information of ROUTER Link-State Advertisement (ROUTER LSA), deletes the linkage previously pointing to DR R1, adds a linkage pointing to the new DR R2, and generates a linkage which points to a router from the new DR. As shown in FIG. 3, after a DR re-election, link-state information in a R2 database is changed. Therefore, R2 will trigger a new route calculation. However, the link-state information of R3 and R4 includes a linkage pointing to an old DR R1, but does not include a linkage pointing to the current new DR R2, such that R2 cannot calculate a routing path to R3 and R4, which may lead to a phenomenon that traffic sent from R2 to R3 and R4 is interrupted.

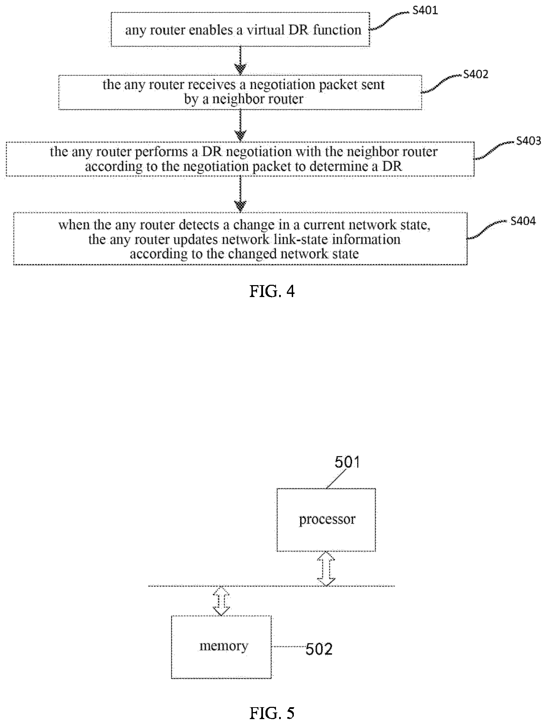

Based on the problems in the above scenarios, FIG. 4 provides a method for updating a router link, and this method may be applied into a network including at least three routers. As shown in FIG. 4, the method includes steps as follow.

At S401, any router enables a virtual DR function.

The any router may be any one of the routers in the network comprising the at least three routers. In an example, the any router may be an ISIS/OSPF function-enabled routing device.

In an embodiment, in this step, the virtual DR function may be enabled on the ISIS/OSPF function-enabled routing device, by which a virtual DR Router ID may be configured. A virtual DR property of an interface network corresponding to the routing device may be initialized as ineffective, for example, the network virtual DR property may be set to FALSE.

In some embodiments, when the any router does not need to enable the virtual DR function, the virtual DR Router ID may be configured by disabling the virtual DR function.

It is to be understood that the above process of enabling the virtual DR function may be applied into any one of the routers in the network.

At S402, the any router receives a negotiation packet sent by a neighbor router.

The neighbor router may be another router in the network except the any router. Through the settings of the above step S401, the virtual DR function has been enabled for all the routers in the network, so the any router may receive negotiation packets sent by the neighbor routers through interfaces. Meanwhile, the any router may also send the negotiation packet to its neighbor routers.

In some embodiments, the negotiation packet may be a packet carrying an option for supporting the virtual DR function and the virtual DR Router ID.

Of course, when the any router does not need to enable the virtual DR function, the any router may send a packet not carrying the option for supporting the virtual DR function or the virtual DR Router ID. That is, the any router may receive the packet not carrying the option for supporting the virtual DR function or the virtual DR Router ID, which is sent by the neighbor router.

In an example, the any router may periodically determine the current network virtual DR function of the corresponding interface. For example, if the current network virtual DR function of the corresponding interface is effective, the network virtual DR function of the interface is set to be ineffective, and the current link-state information is updated. If the current network virtual DR function of the corresponding interface is ineffective, no processing will be performed.

At S403, the any router performs a DR negotiation with the neighbor router according to the negotiation packet to determine a DR.

In this step, after receiving the negotiation packet sent by the neighbor router, the any router may determine the network virtual DR function of itself.

For example, if the network virtual DR function of the any router is ineffective, that is, if the any router does not have the capability of supporting the virtual DR, the any router does not process the negotiation packet. If the network virtual DR function of the any router is effective, that is, if the any router has the capability of supporting the virtual DR, the any router further determines contents of the negotiation packet. For example, the any router may determine whether the negotiation packet carries an option for supporting the virtual DR function and the virtual DR Router ID, or the any router may determine whether the option for supporting the virtual DR function and the virtual DR Router ID carried in the negotiation packet are the same as the option for supporting the virtual DR function and the virtual DR Router ID of the any router.

In an embodiment, if the negotiation packet does not carry the option for supporting the virtual DR function or the virtual DR Router ID, or if both of the option for supporting the virtual DR function and the virtual DR Router ID carried in the negotiation packet are different from the option for supporting the virtual DR function and the virtual DR Router ID of the any router, this means that the neighbor router fails to negotiate with the any router.

If both of the option for supporting the virtual DR function and the virtual DR Router ID carried in the negotiation packet are the same as the option for supporting the virtual DR function and the virtual DR Router ID of the any router, this means that the neighbor router successfully negotiates with the any router.

In an example, when the neighbor router successfully negotiates with the any router, the any router and the neighbor router perform a DR election by means of any existing DR election method to determine the DR.

It is to be noted that when all the routers in the network enable the virtual DR function, one of the at least three routers in the network is elected as a router pointing to a virtual DR. That is, among the at least three routers, there exists one router pointing to the virtual DR, and this actually determined DR performs relevant duties of the virtual DR in the name of the virtual DR.

It is to be understood that the any router involved in this embodiment may be a router pointing to the virtual DR. That is, the any router performs duties of the virtual DR in the role of a real DR. The any router may also be a router controlled by other routers pointing to the virtual DR. That is, any one of the other neighbor routers points to the virtual DR to perform the duties of the virtual DR, and the any router, as a subordinate router, is controlled by the any one of the other neighbor routers.

In this embodiment, after the DR is elected and determined by the any router and the neighbor routers in the network, the link-state information of the network may be updated. Meanwhile, the any router may determine whether the network virtual DR function of its interface is effective.

At S404, in response to any router detecting a change in a current network state, the any router updates network link-state information according to the changed network state.

After completing the establishment of a communication network between the any router and the neighbor routers based on the above-mentioned processes from steps S401 to S403, the any router may detect a current network state in real time or periodically.

If the current network state is changed, the any router may update the network link-state information according to the changed network state.

In an embodiment, the change in the current network state may include: a change in the DR of the network detected by the any router, or a change in an interface state of the any router itself.

Through the above mentioned way, when the any router in the network detects that the current network state is changed, the any router may update the network link-state information according to the changed network state. Since there is one router in the at least three routers in the network pointing to the virtual DR, when the network state is changed, the virtual DR may shield the change in the network, such that other routers in the network will not refresh the related link-state information pointing to the virtual DR. In some cases, when a real DR of the network is changed and all devices need to refresh the link-state information pointing to the latest DR, there may occur a problem such as traffic interruption caused by routing learning failure, and such problems may be solved in the above way.

In an example, in step S401, the DR in the ISIS protocol corresponds to a designated intermediate system (DIS). According to the ISIS protocol, a system ID is used to represent a router ID, and the virtual DR ID corresponds to a virtual DIS System ID. For example, when the virtual DIS System ID is 1111.1111.1111, this means that the configured virtual DR route ID is 1111.1111.1111. In the OSPF protocol, when the virtual DIS System ID is configured as 1.1.1.1, this means that the configured virtual DR route ID is 1.1.1.1.

In some embodiments, the ISIS protocol may indicate that the virtual DR function is carried by carrying the virtual DR function Tag-Length-Value (TLV) field in a HELLO packet, where the Value field is the route ID of the virtual DR.

In some embodiments, the OSPF protocol may use an unused field in the HELLO packet options to indicate that the DR function is carried, and in the case of carrying the DR function, a value of a neighbor field is used to indicate a value of the virtual DR Router ID.

It is to be noted that when the DR link-state information is generated based on the OSPF protocol, an interface address of the virtual DR needs to be filled in. Therefore, an Internet Protocol (IP) address needs to be assigned to the virtual DR. In an embodiment, the IP address may be set as an advertisement address of a network segment corresponding to the interface network. For example, if an interface network segment prefix is 10.1.1.0/24, an address of the virtual DR may be set to 10.1.1.255, or, if the interface network segment prefix is 20.1.0.0/16, the address of the corresponding virtual DR is 20.1.255.255.

In an example, the step S403 includes: when the any router fails to negotiate with the neighbor router, and if the any router determines that the neighbor router supports the virtual DR function before, resetting the virtual DR function of the neighbor router to be ineffective, and further determining whether the network virtual DR function of its corresponding interface is effective; and if the network virtual DR function of its corresponding interface is effective, setting the network virtual DR function of the corresponding interface to be ineffective, and triggering to refresh the link-state information. Otherwise, if the network virtual DR function of its corresponding interface is ineffective, the any router will not perform any processing. Likewise, if the neighbor router of the any router does not support the virtual DR function before, the any router will not perform any processing either.

In an example, the step S403 includes: when the any router successfully negotiates with the neighbor router, and if the any router determines that the neighbor router supports the virtual DR function before, the any router will not perform any processing. Otherwise, if the any router determines that the neighbor router does not support the virtual DR function before, the any router resets the virtual DR function of the neighbor router to be effective, and further determines whether the network virtual DR function of its corresponding interface is updated to be effective. If all the current neighbor routers support the virtual DR function, the any router sets the network virtual DR function of its corresponding interface to be effective, and triggers to refresh the link-state information. If there is a router that does not support the virtual DR function among the neighbor routers, the any router will not perform any processing.

In an example, after the any router negotiates with the neighbor router to determine the DR in the step S403, if the any router determines that the network virtual DR function of its interface is effective, the any router may further determine whether the any router itself is the DR of the current network, to determine whether to perform the duties of the virtual DR.

If the any router is the DR of the current network, the any router performs the duties of the virtual DR. For example, if none of the neighbor routers in the current network are in the enabled state, the any router will not perform any processing. If at least one neighbor router in the current network is in the enabled state, the any router generates DR link-state information and local router link-state information. In an embodiment, an advertised router field in the DR link-state information of the network may be a virtual DR field value locally configured by the any router, and a field value pointing to a DR in local router link-state information may be a virtual DR field value locally configured by the any router.

If the any router determines that the any router itself is not the DR of the current network, and when a neighbor state between the any router itself and the current network DR is enabled, the any router generates the local router link-state information, where the field value pointing to the DR in the local router link-state information may be the virtual DR field value locally configured. Otherwise, when the neighbor state between the any router and the current network DR is not enabled, the any router will not perform any processing.

In an example, if the any router determines that the network virtual DR function of its interface is ineffective, the any router updates the network link-state information according to a first mechanism. The first mechanism may be any existing manner for generating the network link-state information. For example, the first mechanism may be that the any router learns a DR in the network and a subordinate router controlled by the DR by means of exchange of packets between the any router and other routers in the network, to generate the network link-state information of the entire network.

In an example, when a DR in the network is changed, the DR may trigger to refresh the link-state information in the network. If the any router detects that the DR in the current network is changed, the any router may update the network link-state information according to the network virtual DR function of the any router itself.

The above-mentioned network virtual DR function may be understood as actual situation of the network virtual DR capability of the any router. For example, if the network virtual DR function of the any router is effective, it may be understood that the any router has the virtual DR capability; and if the network virtual DR function of the any router is ineffective, it may be understood that the any router does not have the virtual DR capability.

In an embodiment, when the network virtual DR function of the any router is effective, the any router updates the network link-state information according to its device property; or when the network virtual DR function of the any router is ineffective, the any router updates the network link-state information according to the first mechanism.

For example, after the current network DR is changed, and if the any router determines that its network virtual DR function is effective, the any router may further determine whether its device property is the DR. If the any router is the DR of the current network, the any router further determines whether the current network has at least one neighbor router whose neighbor state is enabled. If there is no neighbor router whose neighbor state is enabled, that is, there is one routing device (i.e., the DR) in the network, the any router deletes the previously generated DR link-state information, refreshes the local router link-state information, and deletes the link-state information pointing to the virtual DR. Otherwise, if there is at least one neighbor router whose neighbor state is enabled, the any router advertises the link-state information of the virtual DR in the current network to the neighbor routers, to refresh the network link-state information, where an advertised router field value in the virtual DR link-state information of the current network is the virtual DR field value locally configured by the any router, and a connection router is the neighbor router whose current neighbor state is enabled.

If the any router determines that its device property is not the DR of the current network, that is, if the any router is a router that is controlled by any one of other neighbor routers serving as a real DR bearing responsibility of the virtual DR, the any router further determines whether a neighbor state between the any router and a new DR in the network is enabled. If the neighbor state between the any router and the new DR in the network is enabled, the any router will not perform any processing. If the neighbor state between the any router and the new DR is not enabled, the any router refreshes the local router link-state information and deletes the linkage pointing to the virtual DR.

After the current network DR is changed, and if the any router determines that its network virtual DR function is ineffective, the any router updates the network link-state information according to the first mechanism. That is, the any router generates the link-state information according to an existing common process.

In an example, if the any router detects that its interface state is changed, for example, if the network virtual DR function of the any router interface is changed from effective to ineffective, or if the network virtual DR function of the interface is changed from ineffective to effective, the any router updates the network link-state information according to the device property of its current interface.

In an embodiment, assuming that the network virtual DR function of the interface of the any router is changed from effective to ineffective, the any router determines whether the any router itself to be a DR of the current interface network. If the any router itself is the DR of the current interface network, the any router further determines whether there is link-state information generated by the previous virtual DR. If there is the link-state information generated by the previous virtual DR in the any router, the any router deletes the link-state information generated by the previous virtual DR, regenerates the DR link-state information, and refreshes the local router link-state information to delete the linkage pointing to the virtual DR and add a linkage pointing to a real DR. The regenerated DR link-state information includes an advertised router field value and a connection router, where the advertised router field value is the local router ID, and the connection router is a neighbor router whose current neighbor state is enabled.

Otherwise, if there is no link-state information generated by the previous virtual DR in the any router, and there is a linkage pointing to the virtual DR in the link-state information of the router, the any router refreshes the local router link-state information, deletes the linkage pointing to the virtual DR, and adds the linkage pointing to a real DR.

If the any router determines that it is not the DR of the current interface network, and there is a linkage pointing to the virtual DR in its link-state information, the any router refreshes the local router link-state information, deletes the linkage pointing to the virtual DR, and adds the linkage pointing to the real DR. If there is no linkage pointing to the virtual DR in the link-state information of the any router, the any router will not perform any processing.

Assuming that the network virtual DR function of the interface of the any router is changed from ineffective to effective, the any router determines whether the any router itself to be a DR of the current interface network. If the any router is the DR of the current interface network, the any router further determines whether there is link-state information that has been generated by a previous real DR. If there is the link-state information generated by the previous real DR, the any router deletes the link-state information generated by the previous real DR, regenerates the link-state information of the virtual DR, and refreshes the local router link-state information to delete the linkage pointing to the real DR and add the linkage pointing to the virtual DR. The advertised router field value in the generated virtual DR link-state information is a virtual routing ID of the virtual DR, and the connection router is a neighbor router whose current neighbor state is enabled.

Otherwise, if there is no link-state information generated by the previous real DR in the any router, and there is a linkage pointing to the real DR in the link-state information of the any router, the any router refreshes the local router link-state information to delete the linkage pointing to the real DR and add the linkage pointing to the virtual DR.

If the any router determines that the any router itself is not the DR of the current interface network, and there is a linkage pointing to the real DR in the link-state information of the any router, the any router refreshes the local router link-state information to delete the linkage pointing to the real DR and add the linkage pointing to the virtual DR. If there is no linkage pointing to the real DR in the link-state information of the any router, the any router will not perform any processing.

FIG. 5 is a schematic structural diagram of a router according to an embodiment. As shown in FIG. 5, the router includes a processor 501 and a memory 502. Number of processors 501 in a terminal may be one or more, and one processor 501 is taken as an example in FIG. 5. The processor 501 and the memory 502 in the terminal may be connected by means of a bus or in other ways, and in FIG. 5 it is taken as an example where they are connected by means of the bus.

As a computer-readable storage medium, the memory 502 may be configured to store software programs, computer-executable programs, and modules, such as program instructions/modules corresponding to the method for updating a router link in the embodiment of FIG. 4 of the present application. The processor 501 implements the above method for updating a router link by running the software programs, the instructions and the modules stored in the memory 502.

The memory 502 may mainly include a program storage area and a data storage area, wherein the program storage area may store an operating system, application programs required for at least one function; and the data storage area may store data created according to the use of a device, etc. Besides, the memory 502 may include a high speed random access memory, or further include a non-volatile memory, for example, at least one magnetic disk storage device, flash memory, or other non-volatile solid-state storage devices.

The embodiments of the present application further provide a storage medium including computer-executable instructions which are configured to perform a method for updating a router link when they are executed by a computer processor, and the method may be applied into a network including at least three routers. The method includes a step as follow.

When any router detects a change in a current network state, the any router updates network link-state information according to the changed network state.

One of the at least three routers is elected as a router pointing to a virtual DR. The any router is a router pointing to the virtual DR, or the any router is a router controlled by other routers pointing to the virtual DR.

The above are merely exemplary embodiments of the present application, and are not intended to limit the scope of protection of the present application.

In general, the embodiments of the present application may be implemented in hardware or special-purpose circuits, software, logic, or any combination thereof. For example, some aspects may be implemented in hardware, while other aspects may be implemented in firmware or software that may be executed by controller, microprocessor or other computing device, although the present application is not limited thereto.

The embodiments of the present application may be implemented by executing computer program instructions by means of a data processor of a downlink control information scheduling apparatus, for example, in a processor entity, or by means of hardware, or by means of a combination of software and hardware. The computer program instructions may be assembly instructions, instruction set architecture (ISA) instructions, machine instructions, machine-dependent instructions, microcode, firmware instructions, state setting data, or source codes or object codes written in any combination of one or more programming languages.

The block diagrams of any logic flow in the drawings of the present application may represent program steps, or may represent interconnected logic circuits, modules and functions, or may represent a combination of the program steps and the logic circuits, the modules, and the functions. The computer programs may be stored on memory. The memory may be of any type suitable for local technical environment and may be implemented using any suitable data storage technology, such as, but not limited to, read-only memory (ROM), random access memory (RAM), optical memory devices and systems (DVD or CD discs), etc. The computer-readable media may include non-transitory storage media. The data processor may be of any type suitable for the local technical environment, such as but not limited to a general-purpose computer, a special-purpose computer, a microprocessor, a digital signal processor (DSP), an application-specific integrated circuit (ASIC), a programmable logic device (FGPA), and a processor based on multi-core processor architectures.

A detailed description of the exemplary embodiments of the present application has been provided above by way of illustrative and non-limiting examples. However, when considered in conjunction with the accompanying drawings and the claims, various modifications and adjustments to the above embodiments are apparent to those skilled in the art without departing from the scope of the present application. Accordingly, the proper scope of the present application will be determined with reference to the claims.

## Claims

1. A method for updating a router link, the method being applied in a network comprising at least three routers, and the method comprising:
in response to any router detecting a change in a current network state, updating network link-state information according to the changed network state;
wherein one of the at least three routers is elected as a router pointing to a virtual designated router (DR), the any router being a router pointing to the virtual DR, or the any router being a router controlled by other routers pointing to the virtual DR.

2. The method of claim 1, wherein the change in the current network state comprises: a change in the DR of the network detected by the any router, or a change in an interface state of the any router.

3. The method of claim 1 or 2, wherein the step of updating network link-state information according to the changed network state comprises:
in response to any router detecting the change in the DR of the network, updating, by the any router, the network link-state information according to a network virtual DR function of the any router; or
in response to a change in the interface state of the any router, updating, by the any router, the network link-state information according to a device property of a current interface.

4. The method of claim 3, wherein the step of updating, by the any router, the network link-state information according to a network virtual DR function of the any router comprises:
in response to the network virtual DR function of the any router being effective, updating, by the any router, the network link-state information according to a device property of the any router; and
in response to the network virtual DR function of the any router being ineffective, updating, by the any router, the network link-state information according to a first mechanism.

5. The method of claim 4, wherein the step of updating, by the any router, the network link-state information according to a device property of the any router comprises:
in response to the device property of the any router being the DR, and in response to the any router not having a neighbor router whose neighbor state is enabled, deleting, by the any router, generated DR link-state information and link-state information pointing to the virtual DR; or
in response to the device property of the any router being the DR, and in response to the any router having a neighbor router whose neighbor state is enabled, advertising, by the any router, the link-state information of the virtual DR to the neighbor router; or
in response to the device property of the any router being not the DR, and in response to the neighbor state between the any router and the DR being enabled, not updating, by the any router, the network link-state information; or
in response to the device property of the any router being not the DR, and in response to the neighbor state between the any router and the DR being not enabled, deleting, by the any router, the link-state information pointing to the virtual DR.

6. The method of claim 3, wherein the step of in response to a change in the interface state of the any router, updating, by the any router, the network link-state information according to a device property of a current interface comprises:
in response to a change of the interface state of the any router from "effective" to "ineffective" and the device property of the current interface of the any router being the DR, and in response to presence of link-state information of a previous virtual DR in the any router, deleting, by the any router, the link-state information of the previous virtual DR and the link-state information pointing to the virtual DR, and adding, by the any router, link-state information pointing to the DR; or
in response to a change of the interface state of the any router from "effective" to "ineffective" and the device property of the current interface of the any router being the DR, and in response to absence of the link-state information of the previous virtual DR in the any router and presence of the link-state information pointing to the virtual DR in the any router, deleting, by the any router, the link-state information pointing to the virtual DR, and adding, by the any router, the link-state information pointing to the DR; or
in response to a change of the interface state of the any router from "effective" to "ineffective" and the device property of the current interface of the any router being not the DR, and in response to presence of the link-state information pointing to the virtual DR in the any router, deleting, by the any router, the link-state information pointing to the virtual DR, and adding, by the any router, the link-state information pointing to the DR; or
in response to a change the interface state of the any router from "effective" to "ineffective" and the device property of the current interface of the any router being not the DR, and in response to absence of the link-state information pointing to the virtual DR in the any router, not updating, by the any router, the network link-state information.

7. The method of claim 3, wherein the step of in response to a change in the interface state of the any router, updating, by the any router, the network link-state information according to a device property of a current interface comprises:
in response to a change of the interface state of the any router from "ineffective" to "effective" and the device property of the current interface of the any router being the DR, and in response to presence of link-state information of a previous DR in the any router, deleting, by the any router, the link-state information of the previous DR and link-state information pointing to the DR, and adding, by the any router, link-state information pointing to the virtual DR; or
in response to a change of the interface state of the any router from "ineffective" to "effective" and the device property of the current interface of the any router being the DR, and in response to absence of the link-state information of the previous DR in the any router and presence of the link-state information pointing to the DR in the any router, deleting, by the any router, the link-state information pointing to the DR, and adding, by the any router, the link-state information pointing to the virtual DR; or
in response to a change of the interface state of the any router from "ineffective" to "effective" and the device property of the current interface of the any router being not the DR, and in response to presence of the link-state information pointing to the DR in the any router, deleting, by the any router, the link-state information pointing to the DR, and adding, by the any router, the link-state information pointing to the virtual DR; or
in response to a change of the interface state of the any router from "ineffective" to "effective" and the device property of the current interface of the any router being not the DR, and in response to absence of the link-state information pointing to the DR in the any router, not updating, by the any router, the network link-state information.

8. The method of claim 1, further comprising:
enabling, by the any router, a virtual DR function;
receiving, by the any router, a negotiation packet sent by a neighbor router; and
performing, by the any router, a DR negotiation with the neighbor router according to the negotiation packet to determine a DR.

9. The method of claim 8, after determining the DR, the method further comprises:
updating, by the any router, local link-state information according to the network virtual DR function of the any router.

10. A router, comprising:
a memory, a processor, and a computer program stored in the memory and executable by the processor, wherein the computer program, when executed by the processor, causes the processor to perform the method for updating a router link of any one of claims 1 to 9.

11. A computer-readable storage medium storing a computer program which, when executed by a processor, causes the processor to perform the method for updating a router link of any one of claims 1 to 9.
